# EUROPEAN PATENT APPLICATION

(11) **EP 4 708 662 A1**
(43) Date of publication of application: **11.03.2026**
(21) Application number: 24800052.3
(22) Date of filing: 10.04.2024
(51) Int. Cl.: H02M 7/06

(54) **CONVERTER DEVICE AND MOTOR DRIVE DEVICE COMPRISING SAME**

(30) Priority: 02.05.2023 JP 2023076153
(71) Applicant: MITSUBISHI HEAVY INDUSTRIES THERMAL SYSTEMS, LTD., Tokyo 100-8332 (JP)
(72) Inventor: KUHARA, Masakazu, Tokyo 100-8332 (JP); SERIZAWA, Kazuhiko, Tokyo 100-8332 (JP); SUMITO, Kiyotaka, Tokyo 100-8332 (JP); KOMIYA, Shinichi, Tokyo 100-8332 (JP)
(74) Representative: Cabinet Beau de Loménie
(86) International application number: PCT/JP2024/014594
(87) International publication number: WO 2024/228321

(57) **Abstract**

The purpose of the present invention is to provide a converter device with which it is possible to suppress a surge current flowing in a switching element and an electric element connected to the switching element, and a motor drive device comprising the same. This converter device comprises: a bridge rectification circuit including a plurality of rectification elements (D1-D4) for rectifying power supplied from an AC power supply; a plurality of capacitors (C1, C2) connected in parallel to an output side of the bridge rectification circuit and connected in series with each other; a switching element (SW1) having a first terminal connected to a midpoint (P1) between the plurality of rectification elements connected in series and having a second terminal connected to a midpoint (P2) between the plurality of capacitors; and a control unit (24) that, by controlling the state of the switching element, switches between low-voltage control in which a current is supplied from one direction to all the capacitors, and high-voltage control in which a capacitor charged for each half cycle of the AC power supply is switched. The control unit turns on the switching element at a switching timing at which a difference between voltages at both ends of the switching element becomes substantially zero.

## Description

### Technical Field

The present disclosure relates to a converter device and a motor drive device provided with the converter device.

### Background Art

In the related art, rectification control and voltage boosting control using a bridge circuit configured of power transistors have been widely used.

For example, a configuration of an inverter device that includes a bridge circuit composed of diodes and capacitors and supplies power from an alternating-current power supply is disclosed in PTL 1. This inverter device converts an alternating-current voltage, which is output from the alternating-current power supply, into a direct-current voltage, and controls ON/OFF of a relay that switches a conduction state of the bridge circuit according to a frequency of the converted direct-current voltage to switch between two rectification modes of a bridge rectification mode and a double voltage rectification mode.

### Citation List

### Patent Literature

[PTL 1] Japanese Unexamined Patent Application Publication No. S61-112575

### Summary of Invention

### Technical Problem

In the bridge circuit disclosed in PTL 1, in switching the ON/OFF of the relay during an operation of the bridge circuit, in a case where a voltage is present between both terminals of contact points of the relay, a surge current flows through the relay and an electrical element connected to the relay at a point in time at which the relay is turned on. The surge current flowing through the electrical element connected to the relay increases in proportion to the magnitude of the voltage between both terminals of the contact points of the relay. Further, in a case where the surge current is excessive, durability and service life of the relay and the electrical element connected to the relay are reduced, which may cause a failure.

The present disclosure aims to provide a converter device and a motor drive device provided with the converter device capable of suppressing a surge current flowing through a switching element and an electrical element connected to the switching element.

### Solution to Problem

According to an aspect of the present disclosure, there is provided a converter device including a bridge rectification circuit that includes a plurality of rectification elements that rectify alternating-current power supplied from an alternating-current power supply, a plurality of capacitors that are connected in parallel to an output side of the bridge rectification circuit and are connected to each other in series, a switching element having a first terminal that is connected to a middle point between the plurality of rectification elements connected in series and a second terminal that is connected to a middle point between the plurality of capacitors, and a control unit that controls ON/OFF of the switching element to switch between low-voltage control in which a current is supplied to all of the capacitors from one direction and high-voltage control in which the capacitors charged for each half cycle of the alternating-current power supply are switched, in which the control unit turns on the switching element at a switching timing at which a difference between voltages at both ends of the switching element is zero.

A motor drive device in some embodiments of the present disclosure includes the converter device.

### Advantageous Effects of Invention

According to the present disclosure, it is possible to achieve an effect of suppressing the surge current flowing through the switching element and the electrical element connected to the switching element.

### Brief Description of Drawings

FIG. 1 is a diagram showing a configuration of a motor drive device according to one embodiment of the present disclosure.
FIG. 2 is a diagram showing a configuration of a control unit according to one embodiment of the present disclosure.
FIG. 3 is an example diagram of waveforms showing transitions of a current and a voltage at a time of each control in a converter device.
FIG. 4 is a comparison diagram showing a relationship between a timing at which a connection state of a relay is switched and a surge current generated at the time of switching.
FIG. 5 is an example diagram of a converter device in which a resistor and a capacitor as a filter are provided in the converter device in FIG. 1.
FIG. 6 is a diagram showing a simulation result of an input voltage and a difference between voltages at both ends of the relay in a case where inductance is 1 mH and capacitance is 2000 µF, in the converter device in FIG. 5.
FIG. 7 is a diagram showing a simulation result of the input voltage and the difference between voltages at both ends of the relay in a case where inductance is 10 mH and capacitance is 2000 µF, in the converter device in FIG. 5.
FIG. 8 is a diagram showing a simulation result of the input voltage and the difference between voltages at both ends of the relay in a case where inductance is 1 mH and capacitance is 3000 µF, in the converter device in FIG. 5.
FIG. 9 is an example diagram of a converter device in which detection resistors for detecting respective voltages of both terminals of the relay are provided in the converter device in FIG. 1.
FIG. 10 is an example diagram of a converter device in which detection resistors for detecting a difference between voltages at both ends of the relay are provided in the converter device in FIG. 1.

### Description of Embodiments

### [First Embodiment]

Hereinafter, a converter device according to one embodiment of the present disclosure will be described with reference to drawings.

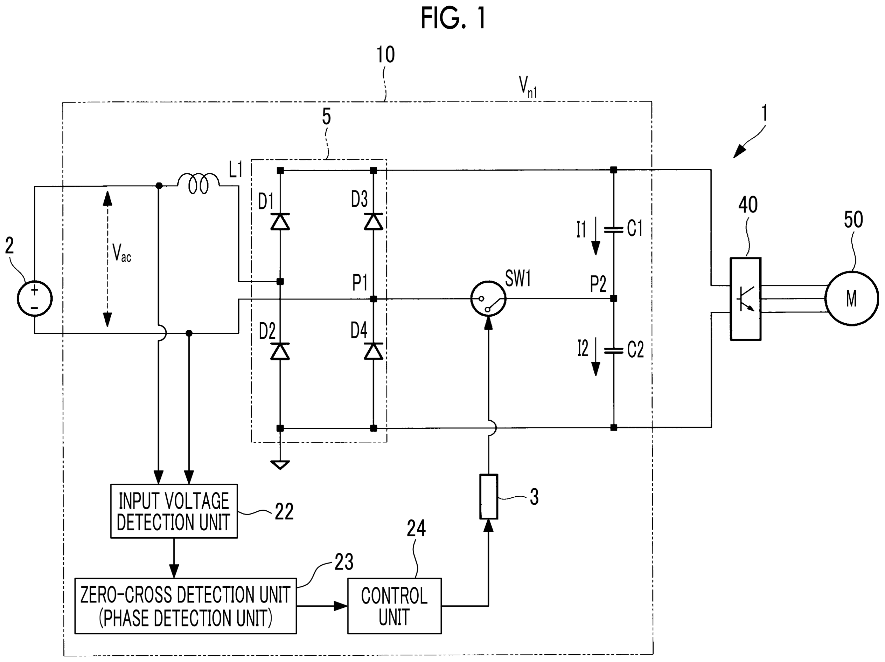

FIG. 1 is a diagram showing a configuration of a motor drive device according to one embodiment of the present disclosure. A motor drive device 1 includes an alternating-current power supply 2, a converter device 10, an inverter device 40, and a motor 50, as shown in FIG. 1. The converter device 10 includes a reactor L1, diodes (rectification elements) D1 to D4 connected in a bridge manner, capacitors C1 and C2, a relay (switching element) SW1, a power supply device for relay drive 3, an input voltage detection unit 22, a zero-cross detection unit 23, and a control unit 24.

The converter device 10 converts alternating-current power, which is supplied from the alternating-current power supply 2, into direct-current power. The direct-current power generated by the converter device 10 is converted into three-phase alternating-current power by, for example, the inverter device 40 to be used to drive the motor 50. The motor 50 is driven according to the three-phase alternating-current power supplied from the inverter device 40, and is, for example, a compressor motor used in an air conditioner.

The alternating-current power supply 2 is, for example, a single-phase alternating-current power supply, and supplies an input voltage and an input current to the converter device 10.

A bridge rectification circuit 5 included in the converter device 10 includes a plurality of diodes D1 to D4 that rectify the alternating-current power supplied from the alternating-current power supply 2. The diodes D1 to D4 are connected in a bridge manner, and the alternating-current power supplied from the alternating-current power supply 2 is rectified by different diodes depending on a polarity of the alternating-current power supply 2.

For example, in a case where the alternating-current power of the alternating-current power supply 2 is supplied from a positive electrode, the alternating-current power supplied from the alternating-current power supply 2 is rectified by passing through the diode D1 and the diode D4. In a case where the alternating-current power of the alternating-current power supply 2 is supplied from a negative electrode, the alternating-current power supplied from the alternating-current power supply 2 is rectified by passing through the diode D3 and the diode D2.

The reactor L1 is provided between the alternating-current power supply 2 and the bridge rectification circuit 5. The reactor L1 stores the power supplied from the alternating-current power supply 2 as energy, and further releases the energy to perform voltage boosting. The capacitor C1 smooths a voltage rectified by passing through each of the diode D1 or the diode D3 to generate a direct-current voltage.

The plurality of capacitors C1 and C2 are connected in parallel to an output side of the bridge rectification circuit 5, and are connected to each other in series. A positive electrode side of the capacitor C1 is connected to cathodes of the diode D1 and the diode D3, and a negative electrode side thereof is connected to a positive electrode side of the capacitor C2. The positive electrode side of the capacitor C2 is connected to the negative electrode side of the capacitor C1, and a negative electrode side thereof is connected to anodes of the diode D2 and the diode D4.

The capacitor C1 and the capacitor C2 smooth the direct-current power, which is output by the bridge rectification circuit 5. The capacitor C1 and the capacitor C2 suppress a fluctuation in a voltage value of the direct-current voltage. The capacitor C1 and the capacitor C2 are, for example, electrolytic capacitors.

A first terminal of the relay SW1 is connected to a middle point P1 between the diode D3 and the diode D4 connected in series, and a second terminal thereof is connected to a middle point P2 between the capacitor C1 and the capacitor C2. The relay SW1 is switched ON/OFF by the power supply from the power supply device for relay drive 3. The power supply device for relay drive 3 controls whether or not to supply the power to the relay SW1, based on a command from the control unit 24.

As will be described below, the converter device 10 controls the ON/OFF of the relay SW1 by the control unit 24 to switch between low-voltage control in which all of the capacitors C1 and C2 are supplied with a current from one direction and high-voltage control in which the capacitor to be charged is switched for each half cycle of the alternating-current voltage.

In a case where the control unit 24 controls the relay SW1 to be turned off, the low-voltage control is executed. In the low-voltage control, in a case where the power is supplied from a positive electrode side of the alternating-current power supply 2, the current rectified by the diode D1 flows to the capacitors C1 and C2, and thus the capacitors C1 and C2 are charged. On the other hand, in a case where the power is supplied from a negative electrode side of the alternating-current power supply 2, the current rectified by the diode D3 flows to the capacitors C1 and C2, and thus the capacitors C1 and C2 are charged.

In a case where the control unit 24 controls the relay SW1 to be turned on, the high-voltage control is executed. In the high-voltage control, in a half cycle in which the power is supplied from the positive electrode side of the alternating-current power supply 2, the capacitor C1 is charged by the current flowing through the diode D1. In a half cycle in which the power is supplied from the negative electrode side of the alternating-current power supply 2, the capacitor C2 is charged by the current flowing through the diode D2. Accordingly, a direct-current voltage that is twice an input value Va of the alternating-current voltage is generated between terminals of the capacitor C1 and the capacitor C2, and the output power is supplied to the inverter device.

The converter device 10 includes the input voltage detection unit 22 that detects the alternating-current voltage as the input voltage. In addition, a current sensor (not shown) for detecting a current between the alternating-current power supply 2 and the bridge rectification circuit 5 may be provided.

The input voltage detection unit 22 detects a voltage value of the input voltage supplied from the alternating-current power supply 2 to the bridge rectification circuit 5, for each cycle sufficiently shorter than a cycle of the alternating-current voltage output by the alternating-current power supply 2. For example, the input voltage detection unit 22 includes a voltage sensor provided between the alternating-current power supply 2 and the bridge rectification circuit 5 to detect the voltage value of the input voltage (an example of physical quantity related to input voltage) read by the voltage sensor.

The input voltage detection unit 22 outputs the detected voltage value of the input voltage to the zero-cross detection unit 23.

The zero-cross detection unit (detection unit) 23 has a function of determining whether or not a polarity of the voltage value of the alternating-current power supply 2, which is detected by the input voltage detection unit 22, is switched (whether or not zero-cross point is reached). The zero-cross detection unit 23 has a function of detecting a phase of the voltage of the alternating-current power supply 2. The zero-cross detection unit 23 is a polarity detection unit that detects the polarity of the voltage of the alternating-current power supply 2, and outputs a zero-cross signal to the control unit 24. For example, the zero-cross detection unit 23 outputs a signal of "1" to the control unit 24 during a period in which the voltage of the alternating-current power supply 2 is positive, and outputs a signal of "0" to the control unit 24 during a period in which the voltage of the alternating-current power supply 2 is negative.

The zero-cross detection unit 23 may detect a phase other than the phase of the zero-cross point related to the voltage of the alternating-current power supply 2, and output a phase detection signal to the control unit 24. In this case, the zero-cross detection unit 23 outputs the signal of "1" or "0" to the control unit 24, for example, based on the detected phase and a phase reference value set in advance. The converter device 10 may independently include the phase detection unit having such a function from the zero-cross detection unit 23.

In the following description of the embodiment, a case will be described as an example in which the zero-cross detection unit 23 outputs the zero-cross signal to the control unit 24.

The control unit 24 is configured of, for example, a central processing unit (CPU), a random-access memory (RAM), a read-only memory (ROM), and a computer-readable storage medium. A series of pieces of processing for realizing various functions is stored, as an example, in a storage medium or the like in a program format, and the CPU reads out this program to the RAM or the like to execute process/calculation processing of information to realize various functions. The program may be applied in a form of being installed in advance in the ROM or another storage medium, a form of being provided in a state of being stored in the computer-readable storage medium, a form of being distributed via wired or wireless communication means, or the like. The computer-readable storage medium is a magnetic disk, a magneto-optical disk, a CD-ROM, a DVD-ROM, a semiconductor memory, or the like.

The control unit 24 switches the ON/OFF of the relay SW1, based on a motor rotation speed, which is a rotation speed of the motor 50, to switch between the low-voltage control and the high-voltage control. For example, in a case where the motor rotation speed is equal to or less than a predetermined threshold value, the control unit 24 performs the low-voltage control with the relay SW1 in an OFF state. In a case where the motor rotation speed exceeds the predetermined threshold value, the control unit 24 performs the high-voltage control with the relay SW1 in an ON state. In the switching of the relay SW1, the control unit 24 switches the relay SW1 from the OFF state to the ON state at a timing at which a difference between voltages at both ends of the relay SW1 is substantially zero.

In the present embodiment, a zero-cross timing (zero-cross point) is employed as the timing at which the difference between the voltages at both ends of the relay SW1 is substantially zero. That is, the control unit 24 receives a signal from the zero-cross detection unit 23, and switches the relay SW1 to ON at the zero-cross timing at which the input voltage is zero.

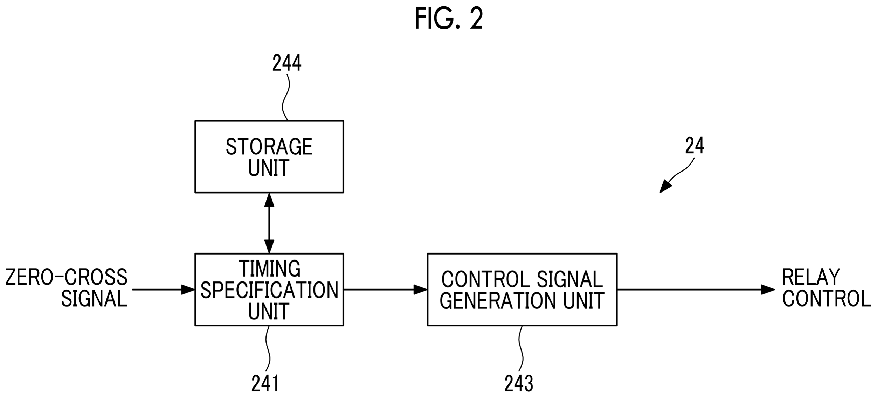

FIG. 2 is a functional configuration diagram showing an example of a function of the control unit 24 according to one embodiment of the present disclosure. The control unit 24 includes a timing specification unit 241, a control signal generation unit 243, and a storage unit 244, as shown in FIG. 2.

The timing specification unit 241 specifies a switching timing. Specifically, the timing specification unit 241 acquires the zero-cross signal from the zero-cross detection unit 23, and specifies the switching timing for switching the relay SW1 based on the acquired zero-cross signal. In the present embodiment, the timing specification unit 241 specifies the zero-cross timing based on the zero-cross signal, and outputs the specified zero-cross timing to the control signal generation unit 243 as the switching timing.

The control signal generation unit 243 generates a control signal for switching the ON/OFF of the relay SW1 at the switching timing acquired from the timing specification unit 241, and outputs the generated control signal to the power supply device for relay drive 3. Accordingly, the power supply device for relay drive 3 is driven based on the control signal, and thus the contact point of the relay SW1 is closed and switched to ON.

In this manner, the control unit 24 switches the relay SW1 to ON at the zero-cross timing, based on an output signal of the zero-cross detection unit. Accordingly, generation of a surge current can be suppressed at both ends of the relay SW1.

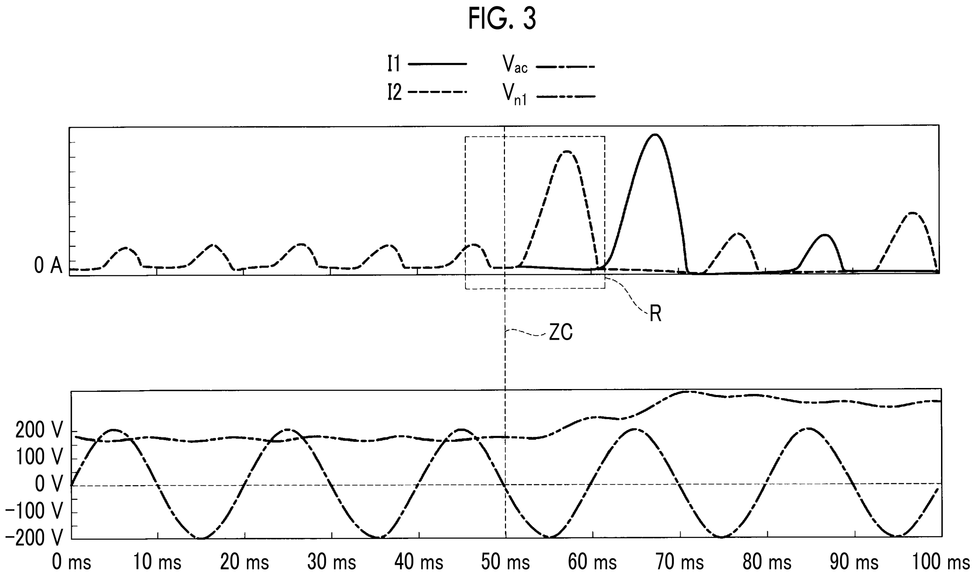

FIG. 3 is a diagram showing a current waveform and a voltage waveform in a case where the relay SW1 is switched from the OFF state to the ON state at the zero-cross timing. In FIG. 3, the horizontal axis indicates time, the vertical axis indicates current in an upper diagram, and indicates voltage in a lower diagram. A solid line indicates a current I1 flowing through the capacitor C1 in FIG. 1, and a broken line indicates a current I2 flowing through the capacitor C2 in FIG. 1. A dashed single-dotted line indicates a voltage Vac in FIG. 1, and a dashed double-dotted line indicates a voltage Vn1 in FIG. 1. A dotted line crossing the upper and lower diagrams indicates a zero-cross timing ZC.

As shown in FIG. 3, until a zero-cross timing ZC point in time, the connection state of the relay SW1 is OFF, and the converter device 10 executes the low-voltage control. The connection state of the relay SW1 is switched to ON at the zero-cross timing ZC point in time at which the voltage Vac is zero, and thus the converter device 10 executes the high-voltage control after the zero-cross timing ZC. It can be understood, from FIG. 3, that each value of the current I1, the current I2, and the voltage Vn1 is increased by the execution of the high-voltage control, as compared with before the execution of the high-voltage control (before zero-cross timing ZC). In this manner, the converter device 10 shown in FIG. 1 can perform both the low-voltage control and the high-voltage control with the switching of the connection state of the relay SW1.

### [Second Embodiment]

Next, the specification of the switching timing of the relay SW1 according to a second embodiment of the present disclosure will be described.

In the first embodiment described above, the zero-cross timing is employed as the timing at which the difference between the voltages at both ends of the relay SW1 is zero. However, actual tests and simulations performed by the inventors find that a time deviation occurred between the zero-cross timing of the input voltage and the timing at which the difference between the voltages at both ends of the relay SW1 is actually zero, and a small amount of surge current is generated due to the time deviation. From this result, knowledge is obtained that there is a more optimal timing as the switching timing for switching the relay SW1. In the present embodiment, a simulation or a test is performed in advance to specify a range of a phase deviation amount from the zero-cross point at which the surge current is equal to or less than a predetermined value, and a phase deviation amount θ for deciding the switching timing of the relay SW1 is decided within the specified range of the phase deviation amount.

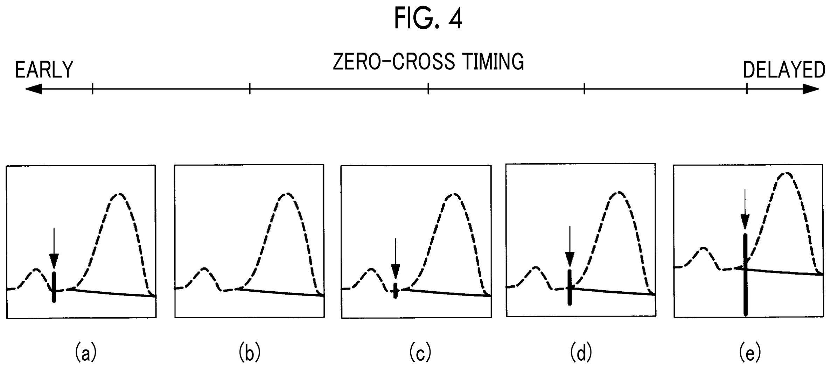

FIG. 4 is a comparison diagram showing a relationship between a timing at which the connection state of the relay is switched and the surge current generated at the time of switching. Each of (a) to (e) of FIG. 4 shows a range corresponding to the range R in FIG. 3, and the switching timing of the relay SW1 is different in each figure. In FIG. 4, a solid line indicates a transition of the current I1 flowing through the capacitor C1 in FIG. 1. A broken line indicates a transition of the current I2 flowing through the capacitor C2 in FIG. 1. In each figure, a solid line parallel to the vertical axis indicates that the surge current is generated.

First, (c) of FIG. 4 shows the surge current in a case where the connection state of the relay SW1 is switched to ON at the zero-cross timing. As can be seen from (c) of FIG. 4, even in a case where the relay SW1 is switched from OFF to ON at the zero-cross timing, the surge current is generated. That is, it can be understood that the difference between the voltages at both ends of the relay SW1 at the zero-cross timing is not necessarily zero. This is because resonance occurs in the voltage, due to the influence of a parasitic capacitance of the reactor L1 or the capacitors C1 and C2 or a dead zone of a Vf of the diodes D1 to D4, which are included in the converter device 10.

Examples of (a) and (b) of FIG. 4 show the presence or absence of the surge current in a case where the switching timing of the relay SW1 is earlier than the zero-cross timing. Examples of (d) and (e) of FIG. 4 show the presence or absence of the surge current in a case where the switching timing of the relay SW1 is delayed with respect to the zero-cross timing.

In a case where the drawings are compared, in the example of (a) of FIG. 4 in which the switching timing of the relay SW1 is made earlier, the surge current larger than that in the example of (c) of FIG. 4 is generated. Similarly, in the examples of (d) and (e) of FIG. 4 in which the switching timing of the relay SW1 is delayed, the surge current larger than that in the example of (c) of FIG. 4 is generated. On the other hand, in the example of (b) of FIG. 4 in which the switching timing of the relay SW1 is made earlier, the surge current is not generated. Accordingly, the difference between the voltages at both ends of the relay SW1 is presumed to be zero at a timing at which the switching timing of the relay SW1 is made earlier by a predetermined phase from the zero-cross timing.

### (Setting of Switching Timing Based on Result of Simulation Performed in Advance)

Hereinafter, a method will be described in which the switching timing of the relay SW1 at which the difference between the voltages at both ends of the relay SW1 is substantially zero is set based on a result of simulation performed in advance.

In the present embodiment, the storage unit 244 stores the phase deviation amount θ obtained by the simulation result or the result of test performed in advance. The timing specification unit 241 specifies the switching timing, which is the timing at which the difference between the voltages at both ends of the relay SW1 is zero, based on the zero-cross timing of the input voltage and the phase deviation amount θ stored in the storage unit 244.

In the present embodiment, in a case where a rotation speed change command for the motor 50, which is included in a compressor, is input to the control unit 24 and the rotation speed of the rotation speed change command is high, the control unit 24 determines that processing of switching from the low-voltage control to the high-voltage control is required.

Next, in a case where the switching from the low-voltage control to the high-voltage control is determined, the timing specification unit 241 specifies the switching timing based on the input zero-cross signal and the phase deviation amount θ stored in the storage unit 244.

The control signal generation unit 243 outputs the control signal for switching the relay SW1 at the switching timing specified by the timing specification unit 241 to switch the relay SW1 from OFF to ON.

Hereinafter, a simulation example will be described in which the phase deviation amount θ for correcting the zero-cross timing of the input voltage is obtained.

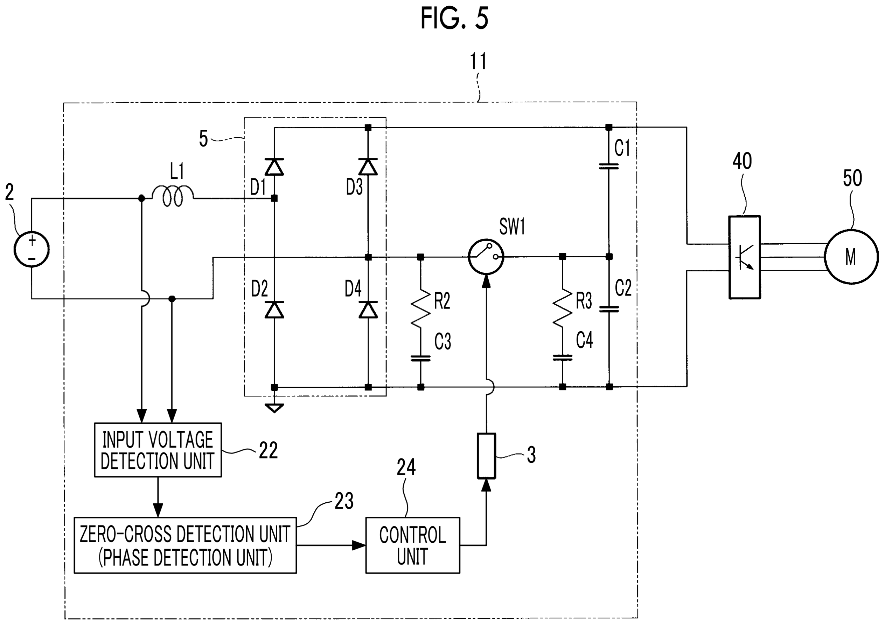

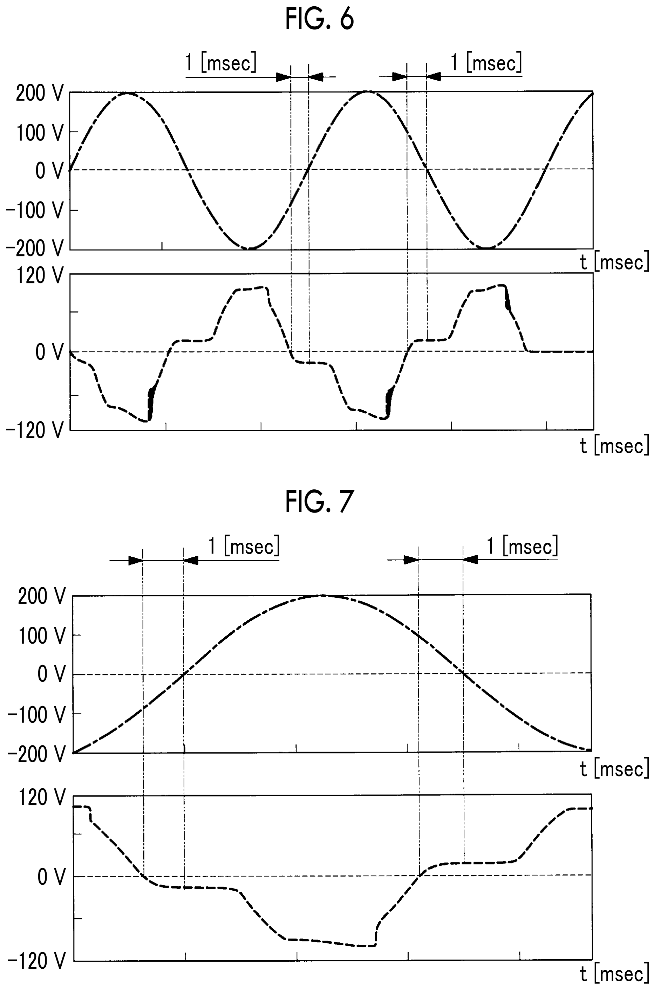

FIG. 5 is a circuit model of the simulation performed in advance. In the circuit model of FIG. 5, resistors R2 and R3 and capacitors C3 and C4 are added to the circuit of FIG. 1. FIG. 6 is a diagram representing a simulation result of the input voltage and the difference between the voltages at both ends of the relay SW1 in a case where the inductance is 1 mH and the capacitance is 2000 µF, using the circuit model of FIG. 5. In FIG. 6, an upper diagram shows a waveform of the input voltage, and a lower diagram shows a waveform of the difference between the voltages at both ends of the relay.

In a case where the upper and lower diagrams of FIG. 6 are compared, timings at which the voltages are zero do not match in both diagrams. This is because resonance occurs in the difference between the voltages at both ends of the relay, due to the influence of an inductance of the reactor L1, the parasitic capacitance of the capacitors C1 and C2, the dead zone of the Vf of the diodes D1 to D4, or the like, which are included in the converter device 10. Thus, for the timing at which the relay SW1 is switched to ON to execute the control switching of the converter device 13, it is necessary to consider a time difference (or phase difference) between the zero-cross timing of the input voltage and the zero-cross timing of the difference between the voltages at both ends of the relay SW1.

As shown in FIG. 6, from the simulation result in a case where the inductance is 1 mH and the capacitance is 2000 µF, it is checked that the timing at which the difference between the voltages at both ends of the relay SW1 is substantially zero is about 1 msec earlier than the zero-cross timing of the input voltage. In a case where the present simulation result is converted into a phase, the phase is about 27 deg. The control signal generation unit 243 sets the switching timing of the relay SW1 to the timing earlier than the zero-cross timing of the input voltage by about 1 msec (about 27 deg), based on the present simulation result. The control signal generation unit 243 outputs the control signal for switching the connection state of the relay SW1 to ON, to the power supply device for relay drive 3, based on the switching timing.

In this manner, the control unit 24 sets the switching timing based on the simulation result under the same condition as a current control condition, which is stored in the storage unit 244, and switches the connection state of the relay SW1 based on the switching timing. Accordingly, the generation of the surge current can be avoided.

FIG. 7 is a diagram showing a simulation result of the input voltage and the difference between the voltages at both ends of the relay in a case where the inductance is 10 mH and the capacitance is 2000 µF, in the converter device in FIG. 5. In FIG. 7, an upper diagram shows a waveform of the input voltage, and a lower diagram shows a waveform of the difference between the voltages at both ends of the relay SW1. The present form is the same as the example shown in FIG. 6 except for the inductance value.

As shown in FIG. 7, from the simulation result in a case where the inductance is 10 mH and the capacitance is 2000 µF, it is checked that the timing at which the difference between the voltages at both ends of the relay SW1 is substantially zero is about 1 msec earlier than the zero-cross timing of the input voltage. In a case where the present simulation result is converted into a phase, the phase is about 27 deg. The control signal generation unit 243 sets the switching timing of the relay SW1 to the timing earlier than the zero-cross timing of the input voltage by about 1 msec (about 27 deg), based on the present simulation result.

In a case where the present simulation result is compared with the simulation result based on the condition of FIG. 6, it is understood that the increase in inductance does not have a significant effect on the time difference between the zero-cross timing of the input voltage and the switching timing at which the difference between the voltages at both ends of the relay SW1 is substantially zero.

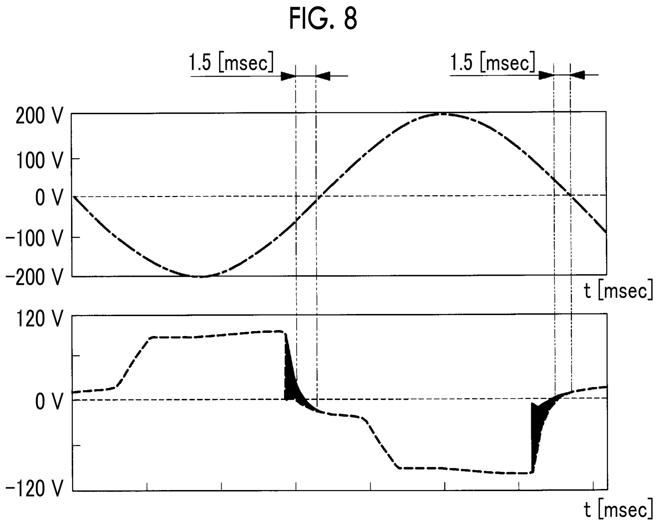

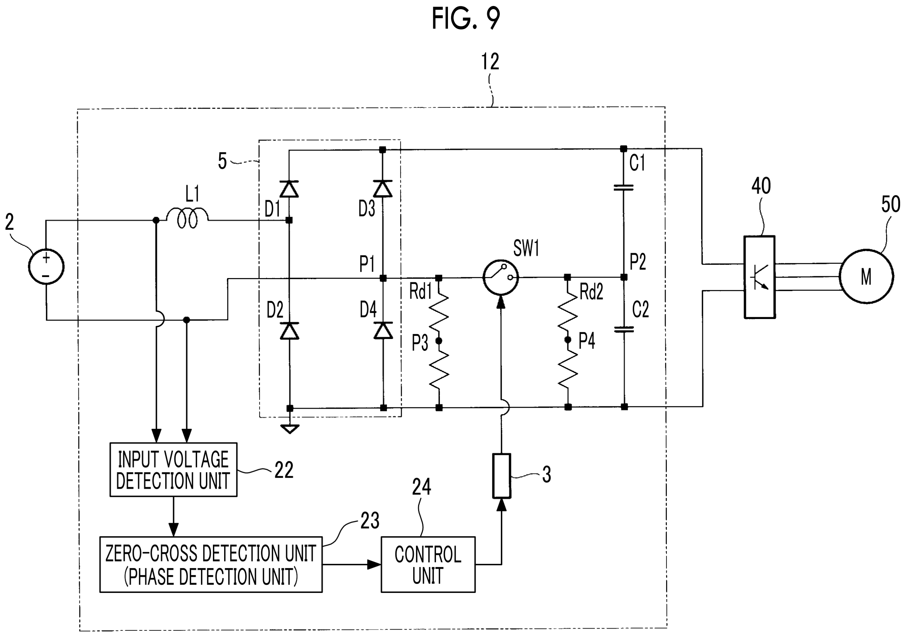

FIG. 8 is a diagram showing a simulation result of the input voltage and the difference between the voltages at both ends of the relay in a case where the inductance is 1 mH and the capacitance is 3000 µF, in the converter device in FIG. 5. In FIG. 8, an upper diagram shows the waveform of the input voltage, and a lower diagram shows a waveform of the difference between the voltages at both ends of the relay SW1. The present form is the same as the example shown in FIG. 9 except for the capacitance value.

As shown in FIG. 8, from the simulation result in a case where the inductance is 10 mH and the capacitance is 3000 µF, it is checked that the timing at which the difference between the voltages at both ends of the relay SW1 is substantially zero is about 1.5 msec earlier than the zero-cross timing of the input voltage. In a case where the present result is converted into a phase, the phase is about 40 deg. The control signal generation unit 243 sets the switching timing, which is the timing at which the connection state of the relay SW1 is actually switched, to the timing earlier than the zero-cross timing of the input voltage by about 1.5 msec (about 40 deg), based on the present simulation result.

In a case where the present simulation result is compared with the simulation result based on the condition of FIG. 6, it is understood that the increase in capacitance has an effect on the time difference between the zero-cross timing of the input voltage and the switching timing at which the difference between the voltages at both ends of the relay SW1 is substantially zero.

Based on each of the above simulation results, a timing that deviates from the zero-cross timing by the phase deviation amount θ is set as the switching timing, in consideration of the influence of an electrical element included in each converter device, and thus the generation of the surge current is more reliably avoided at the time of switching of the relay SW1.

From the simulation results illustrated in FIGS. 6 to 8, the switching timing is, including a margin, for example, a timing at which the phase is advanced by about 10 to 50 deg with respect to the zero-cross timing of the input voltage, and more preferably, a timing at which the phase is advanced by about 27 to 40 deg with respect to the zero-cross timing of the input voltage. These ranges are examples obtained by the present simulation, and are changed as appropriate according to electrical characteristics of the converter device.

From each of the above simulation results, the phase deviation amount θ that affects the zero-cross timing has a numerical value range. That is, the phase deviation amount θ may be a value within the numerical value range in which the generation of the surge current can be avoided. The control unit 24 may set a numerical value range of the phase deviation amount θ that can be set.

A plurality of allowable ranges that are gradually reduced in a predetermined numerical value range, which includes the phase deviation amount θ, may be set. In this manner, since the allowable ranges for the phase deviation amount θ are provided in a stepwise manner, the phase deviation amount θ can be flexibly set according to the control condition of the converter device.

### (Setting of Switching Timing Based on Test Results Performed in Advance)

In the above method, the phase deviation amount θ is obtained based on the result of simulation performed in advance to set the switching timing. However, the control unit 24 may obtain the phase deviation amount θ based on the result of test performed in advance, instead of the simulation result, to set the switching timing. In this case, the storage unit 244 stores the phase deviation amount θ obtained by the result of test performed in advance, and the timing specification unit 241 specifies the switching timing based on the phase deviation amount θ stored in the storage unit. Other pieces of processing performed by the control unit 24 are the same as in a case where the simulation result is used.

### [Third Embodiment]

### (Setting of Switching Timing by Voltage Monitoring)

In the above embodiment, the method has been described in which the switching timing is specified by the deviation of the phase of the zero-cross timing of the input voltage. However, as another method, the difference between the voltages at both ends of the relay SW1 may be monitored to decide the switching timing.

Hereinafter, a method will be described in which the switching timing for switching the connection state of the relay SW1 is set by the monitoring of the voltages at both terminals of the relay SW1.

FIG. 9 is an example diagram of a converter device in which detection resistors for detecting respective voltages of both terminals of the relay are provided in the converter device in FIG. 1.

In a configuration of FIG. 9, voltage-dividing resistor groups (detection units) Rd1 and Rd2, which are detection resistors for detecting a voltage and each include a plurality of resistors, are connected to respective terminals of the relay SW1. Both voltages of a voltage at a middle point P3 of the voltage-dividing resistor group Rd1 and a voltage at a middle point P4 of the voltage-dividing resistor group Rd2 are input to the control unit 24. The control unit 24 may include a microcontroller AD port, and may be capable of performing A/D conversion on an input voltage amount.

For example, in a case where a converter device 11 in FIG. 9 is mounted on and used in an air conditioning device, the rotation speed change command for the motor 50 provided in the compressor is input to the control unit 24, and the control unit 24 switches the control of the converter device 11 from the low-voltage control to the high-voltage control in a case where the rotation speed of the rotation speed change command is high. In this case, first, the control unit 24 determines whether or not the low-voltage control can be switched to the high-voltage control, based on both the input voltages of the voltage at the middle point P3 of the voltage-dividing resistor group Rd1 and the voltage at the middle point P4 of the voltage-dividing resistor group Rd2.

Next, in a case where the control unit 24 determines that the low-voltage control can be switched to the high-voltage control, the control signal generation unit 243 included in the control unit 24 sets the switching timing to a timing at which the voltage at the middle point P3 matches the voltage at the middle point P4, that is, the timing at which the difference between the voltages at both ends of the relay SW1 is zero. The control signal generation unit 243 outputs the control signal for switching the connection state of the relay SW1 to ON, to the power supply device for relay drive 3, based on the switching timing.

In this manner, the control unit 24 sets the switching timing based on each voltage at both terminals of the relay SW1 and switches the connection state of the relay SW1 to ON based on the switching timing, and thus the generation of the surge current in the converter device 11 can be avoided.

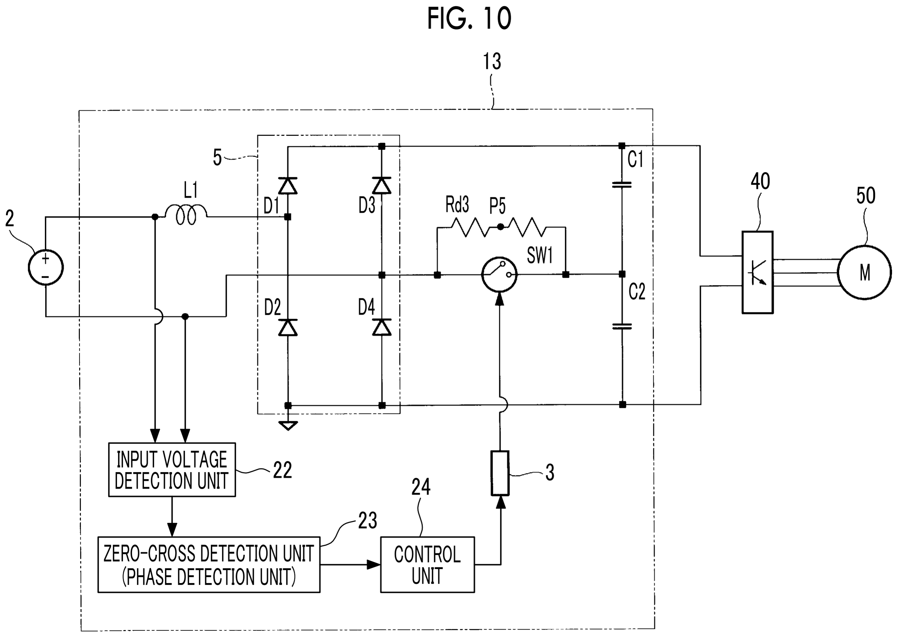

FIG. 10 is an example diagram of a converter device in which detection resistors for detecting the difference between the voltages at both ends of the relay are provided in the converter device in FIG. 1.

In a configuration of FIG. 10, a voltage-dividing resistor group (detection unit) Rd3 that is detection resistors for detecting a voltage and includes a plurality of resistors is connected in parallel to both terminals of the relay SW1. The voltage at a middle point P5 of the voltage-dividing resistor group Rd3 is input to the control unit 24. The control unit 24 may include a microcontroller AD port, and may be capable of performing A/D conversion on an input voltage amount.

Here, for example, in a case where a converter device 12 in FIG. 10 is mounted on and used in the air conditioning device, the rotation speed change command for the motor 50 provided in the compressor is input to the control unit 24, and the control unit 24 switches the control of the converter device 12 from the low-voltage control to the high-voltage control in a case where the rotation speed of the rotation speed change command is high. In this case, first, the control unit 24 determines whether or not the low-voltage control can be switched to the high-voltage control, based on the input voltage at the middle point P5 of the voltage-dividing resistor group Rd3. Specifically, the control unit 24 determines whether or not the surge current flows in a case where the relay SW1 is switched to ON.

Next, in a case where the control unit 24 determines that the low-voltage control can be changed to the high-voltage control, the control signal generation unit 243 included in the control unit 24 sets the switching timing to a timing at which the voltage at the middle point P5 is zero, that is, the timing at which the difference between the voltages at both ends of the relay SW1 is zero. The control signal generation unit 243 outputs the control signal for switching the connection state of the relay SW1 to ON, to the power supply device for relay drive 3, based on the switching timing.

In this manner, the control unit 24 sets the switching timing based on the voltage at the middle point P5 between both terminals of the relay SW1 and switches the connection state of the relay SW1 to ON based on the switching timing, and thus the generation of the surge current in the converter device 12 can be avoided.

In the above example, the voltage detection using the detection resistor has been exemplified, but the present disclosure is not limited to this example. For example, the difference between the voltages at both ends of the relay SW1 may be detected using a voltmeter or a voltage sensor, and other methods may be used as appropriate.

According to the present embodiment, the following effects are achieved.

In the converter devices 10, 11, 12, and 13 of the present disclosure, the control unit 24 may switch the relay SW1 at the switching timing at which the difference between the voltages at both ends of the relay SW1 is substantially zero to switch between the low-voltage control and the high-voltage control. That is, the control unit 24 turns on the relay SW1 at the switching timing at which the difference between the voltages at both ends of the relay SW1 is substantially zero. Accordingly, the surge current flowing through the relay SW1 and the electrical elements connected to the relay SW1, for example, the diodes D1 to D4 or the capacitors C1 and C2 can be suppressed. Damage to each electrical element can be reduced.

In the converter devices 11 and 12 of the present disclosure, the zero-cross detection unit 23 that detects the zero-cross timing of the alternating-current power supplied from the alternating-current power supply is provided, and the control unit 24 may set the switching timing to the timing that deviates from the zero-cross timing detected by the zero-cross detection unit 23 by the predetermined phase amount. The present predetermined phase amount is specified based on the result of simulation performed in advance or the result of test performed in advance. Accordingly, the switching timing at which the difference between the voltages at both ends of the relay SW1 is substantially zero can be set more accurately, and the surge current can be more reliably suppressed.

The predetermined phase amount may be selected from the plurality of allowable ranges that are gradually reduced in the predetermined numerical value range based on the simulation result. In this manner, since the allowable range is provided for the predetermined amount, the predetermined phase amount can be flexibly set according to the control condition of the converter device.

In the converter devices 11 and 12 of the present disclosure, the voltage-dividing resistor groups Rd1, Rd2, and Rd3 that detect the voltage at both ends of the relay SW1 may be provided, and the control unit 24 may set the switching timing based on the detection result detected by any one of the voltage-dividing resistor groups Rd1, Rd2, and Rd3. Accordingly, the timing at which the difference between the voltages at both ends of the relay SW1, which is directly detected, is substantially zero can be set as the switching timing. The surge current can be more reliably suppressed.

The present disclosure has been described above with reference to the embodiments, but the technical scope of the present disclosure is not limited to the above embodiments. Various modifications or improvements can be added to the above embodiments within the scope not departing from the concept of the present disclosure, and forms to which the modifications or the improvements are added are also included in the technical scope of the present disclosure. The above embodiments may be combined as appropriate.

For example, in the present disclosure, the timing at which the difference between the voltages at both ends of the relay SW1 is zero is set as the switching timing. However, in consideration of the margin, the timing at which the difference between the voltages at both ends of the relay SW1 is substantially zero may be specified as the switching timing. In this case, a range of the substantially zero may be decided according to characteristics of the electrical element included in the converter device. A range designated by a designer may be employed.

In the present disclosure, the example has been described in which the relay SW1 is turned on at the switching timing, with the timing at which the difference between the voltages at both ends of the relay SW1 is substantially zero as the switching timing, to avoid the generation of the surge current, but the present disclosure is not limited thereto. The present disclosure may be applied to other switching elements. The circuit configuration of the rectification element included in the converter device is not limited to the example of the present embodiment, and may be any one of a bridge rectification circuit, a horizontal bridgeless circuit, and a full bridgeless rectification circuit.

### (Additional Notes)

A control system described in the above embodiment, a switching circuit including the present control system, and an outdoor unit including the switching circuit are understood as follows, for example.

The converter device and the motor drive device provided with the converter device described in the above embodiment are understood as follows, for example.

According to a first aspect of the present disclosure, a converter device includes a bridge rectification circuit that includes a plurality of rectification elements (D1 to D4) that rectify alternating-current power supplied from an alternating-current power supply, a plurality of capacitors (C1, C2) that are connected in parallel to an output side of the bridge rectification circuit and are connected to each other in series, a switching element (SW1) having a first terminal that is connected to a middle point (P1) between the plurality of rectification elements connected in series and a second terminal that is connected to a middle point (P2) between the plurality of capacitors, and a control unit (24) that controls ON/OFF of the switching element to switch between low-voltage control in which a current is supplied to all of the capacitors from one direction and high-voltage control in which the capacitors charged for each half cycle of the alternating-current power supply are switched, in which the control unit turns on the switching element at a switching timing at which a difference between voltages at both ends of the switching element is substantially zero.

With the converter device of the present disclosure, the control unit switches the switching element to switch between the low-voltage control and the high-voltage control at the switching timing at which the difference between the voltages at both ends of the switching element is substantially zero. For example, in a case where the switching element is switched from OFF to ON at a timing at which the difference between the voltages at both ends of the switching element is not substantially zero, the surge current flows through the switching element and the electrical element connected to the switching element. In a case where the difference between the voltages at both ends of the switching element is large, the surge current also becomes large, and the switching element and the electrical element connected to the switching element may be damaged. The control unit turns on the switching element at the switching timing at which the difference between the voltages at both ends of the switching element is substantially zero. Accordingly, the surge current flowing through the switching element and the electrical element connected to the switching element can be suppressed. Damage to each electrical element can be reduced.

According to a second aspect of the present disclosure, the converter device according to the first aspect further includes a detection unit (23) that detects a zero-cross timing of the alternating-current power supplied from the alternating-current power supply, in which the control unit sets the switching timing to a timing that deviates, by a predetermined amount, from the zero-cross timing detected by the detection unit.

With the converter device of the present disclosure, the detection unit that detects the zero-cross timing of the alternating-current power supplied from the alternating-current power supply is provided, and the control unit sets the switching timing to the timing that deviates, by the predetermined amount, from the zero-cross timing detected by the detection unit. Accordingly, even in a case where the surge current is generated in a case where the switching element is turned on at the zero-cross timing of the alternating-current power supplied from the alternating-current power supply, the timing at which the difference between the voltages at both ends of the switching element is substantially zero can be set as the switching timing. The switching timing of the switching element can be changed as appropriate, and the generation of the surge current can be more reliably suppressed.

According to a third aspect of the present disclosure, in the converter device according to the second aspect, the predetermined phase is set based on a result of simulation performed in advance or a result of test performed in advance.

With the converter device of the present disclosure, the predetermined amount is set based on the result of simulation performed in advance or the result of test performed in advance. Accordingly, the switching timing at which the difference between the voltages at both ends of the switching element is substantially zero can be set more accurately, and the surge current can be more reliably suppressed.

According to a fourth aspect of the present disclosure, the converter device according to the first aspect further includes a detection unit (Rd1, Rd2, Rd3) that detects the voltages at both ends of the switching element, in which the control unit sets the switching timing based on a detection result of the detection unit.

With the converter device of the present disclosure, the detection unit that detects the voltages at both ends of the switching element is provided, and the control unit sets the switching timing based on the detection result detected by the detection unit. Accordingly, the timing at which the difference between the voltages at both ends of the switching element, which are directly detected, is substantially zero can be set as the switching timing. The surge current can be more reliably suppressed.

According to a first aspect of the present disclosure, a motor drive device includes the converter device (10, 11, 12, 13) according to any one of the first to fourth aspects.

### Reference Signs List

1: motor drive device
2: alternating-current power supply
3: power supply device for relay drive
5: bridge rectification circuit
10, 11, 12, 13: converter device
22: input voltage detection unit
23: zero-cross detection unit
24: control unit
40: inverter device
50: motor
241: timing specification unit
243: control signal generation unit
244: storage unit
C1, C2: capacitor
D1 to D4: diode
I1, I2: current
L1: reactor
Rd1, Rd2, Rd3: voltage-dividing resistor group
SW1: relay
ZC: zero-cross timing

## Claims

1. A converter device comprising:
a bridge rectification circuit that includes a plurality of rectification elements that rectify alternating-current power supplied from an alternating-current power supply;
a plurality of capacitors that are connected in parallel to an output side of the bridge rectification circuit and are connected to each other in series;
a switching element having a first terminal that is connected to a middle point between the plurality of rectification elements connected in series and a second terminal that is connected to a middle point between the plurality of capacitors; and
a control unit that controls ON/OFF of the switching element to switch between low-voltage control in which a current is supplied to all of the capacitors from one direction and high-voltage control in which the capacitors charged for each half cycle of the alternating-current power supply are switched,
wherein the control unit turns on the switching element at a switching timing at which a difference between voltages at both ends of the switching element is substantially zero.

2. The converter device according to claim 1, further comprising:
a detection unit that detects a zero-cross timing of the alternating-current power supplied from the alternating-current power supply,
wherein the control unit sets the switching timing to a timing that deviates, by a predetermined phase, from the zero-cross timing detected by the detection unit.

3. The converter device according to claim 2,
wherein the predetermined phase is set based on a result of simulation performed in advance or a result of test performed in advance.

4. The converter device according to claim 1, further comprising:
a detection unit that detects the voltages at both ends of the switching element,
wherein the control unit sets the switching timing based on a detection result of the detection unit.

5. A motor drive device comprising:
the converter device according to claim 1; and
an inverter device that converts direct-current power supplied from the converter device into alternating-current power and outputs the converted alternating-current power.
